# EUROPÄISCHE PATENTSCHRIFT

(11) **EP 3 209 240 B1**
(45) Veröffentlichungstag und Bekanntmachung des Hinweises auf die Patenterteilung: **03.06.2020**
(21) Anmeldenummer: 15781294.2
(22) Anmeldetag: 08.10.2015
(51) Int. Cl.: A61C 13/00, B23B 31/107

(54) **FRÄSMASCHINE UND ROHLING EINES ZAHNTECHNISCHEN BAUTEILS**
MILLING MACHINE AND BLANK FOR A DENTAL COMPONENT
FRAISEUSE ET ÉBAUCHE D'UN COMPOSANT DE DENTISTERIE

(30) Priorität: 20.10.2014 DE 102014015423
(43) Veröffentlichungstag der Anmeldung: 30.08.2017
(73) Patentinhaber: Amann Girrbach AG, 6842 Koblach (AT)
(72) Erfinder: SCHELLING, Peter, 6845 Hohenems (AT); ANDERS, Johannes, 6800 Feldkirch (AT)
(74) Vertreter: Flosdorff, Jürgen
(86) Internationale Anmeldenummer: PCT/EP2015/001982
(87) Internationale Veröffentlichungsnummer: WO 2016/062375

(56) Entgegenhaltungen:
- EP-A1- 2 499 993
- US-A- 5 342 696
- US-A1- 2004 120 781
- US-A1- 2011 171 603
- US-B1- 6 224 371

## Beschreibung

Die Erfindung betrifft eine Fräsmaschine zum Herstellen eines zahntechnischen Bauteils aus einem Rohling gemäß dem Oberbegriff des Anspruchs 1 und einen Rohling, aus dem ein zahntechnisches Bauteil gefräst werden kann, gemäß dem Oberbegriff des Anspruchs 8.

### Stand der Technik

Zur Herstellung von zahntechnischen Bauteilen, wie beispielsweise Kronen oder Abutments, werden zum Teil Fräsmaschinen verwendet. Aus dem Stand der Technik sind Fräsmaschinen im Zusammenhang mit der Zahntechnik daher bekannt.

So zeigt beispielsweise die US 2006/0035776 A1 eine Fräsmaschine, wobei ein Rohling über eine Spindel mit einer bestimmten Form in eine entsprechende Fassung der Fräsmaschine eingesetzt wird. Durch den Rohling oder ein entsprechend mit dem Rohling verbundenes Teil wird hier noch keine Anschlussgeometrie definiert, so dass diese erst im späteren Verlauf des Fertigungsprozesses definiert wird.

Weiterhin offenbart die US 2012/0214133 A1 eine Fixierung des Rohlings, aus dem das spätere zahntechnische Bauteile geformt werden soll, über eine mit dem Rohling verbundene Verschraubung, die später im Kiefer verankert wird. Dazu wird diese Fassung des Rohlings, bzw. des späteren Bauteils, in die Fräsmaschine eingelassen und mit dieser zwecks der Fixierung verbunden.

Die DE 10 2011 005 797 A1 beschreibt einen Werkstückhalter, auf dem der Rohling angeordnet wird. Der Werkstückhalter hat dabei eine plane Oberfläche, auf der der Rohling angeordnet werden kann. Diese Anordnung aus Werkstückhalter und Rohling wird anschließend form- und kraftschlüssig in der Halterung der Fräsmaschine angeordnet.

Die DE 10 2011 109 939 A1 zeigt eine Aufspannvorrichtung für einen oder mehrere Rohlinge, wobei die Rohlinge zusammen mit der Aufspannvorrichtung in die Fräsmaschine eingespannt werden können, um aus den Rohlingen die zahntechnischen Bauteile zu fräsen.

Die DE 10 2008 013 829 A1 zeigt weiterhin einen Rohling mit einer Kodierung und ein Verfahren zur Herstellung eines zahntechnischen Formteils aus diesem Rohling. Dabei wird die Kodierung des Rohlings als Informationsträger für Eigenschaften des Rohlingkörpers genutzt, um die Lage, die Abmessung oder die Art der Struktur durch abtasten oder vermessen des Rohlings festzustellen.

Die EP 2 674 128 A2 zeigt ebenfalls ein Verfahren zur Herstellung eines Laboranalogs für Dentalimplantate aus einem Rohling.

Die EP 0 160 797 zeigt einen Rohlingskörper, der ein Ansatzstück aufweist das in eine Fräsmaschine eingesetzt werden kann. Dazu sind ein oder mehrere Referenzflächen vorgesehen, die eine bestimmte Ausgangslage des Rohlings in Bezug auf die Fräsmaschine definieren.

Die EP 0 455 853 A1 offenbart ebenfalls eine Fräsmaschine, mit der aus Rohlingen zahntechnische Bauteile hergestellt werden können. Dazu sind eine Spindel zur Aufnahme des Werkstücks bzw. Rohlings und zwei Werkzeugspindeln, die relativ zum Werkstück in Rotation versetzt werden können, vorgesehen. Die mit den Werkzeugspindeln verbundenen Werkzeuge können auf das Werkstück zu oder von diesem wegbewegt werden, während die Werkzeugspindeln entsprechend vorgegebener Konturendaten gesteuert und um das Werkstück herum bewegt werden.

Die US 2005/0276672 A1 zeigt ebenfalls einen Rohling, aus dem ein zahntechnisches Werkstück, wie beispielsweise eine Krone, hergestellt werden kann. Diesem Rohling ist ebenfalls eine Halterung zugeordnet, die in einen entsprechenden Sockel eingelassen werden kann. Über Markierungen an der Halterung kann das Werkstück identifiziert und in der Fräsmaschine fixiert werden.

Auch die JP 2000 135 228 A zeigt eine Fräsmaschine, in die ein Rohling zur Fertigung eines zahntechnischen Bauteils eingelassen werden kann. Auch diesem Rohling ist eine Halterung zugeordnet, an der ein oder mehrere Kerben ausgebildet sein können, um einen korrekten Sitz bzw. eine Identifikation des Bauteils zu ermöglichen.

Mit der in der JP 10-118097 dargestellten Fräsmaschine können mehrere Rohlinge auf entsprechenden Haltertischen in einer Fräsmaschine angeordnet werden und aus diesen Rohlingen die entsprechenden zahntechnischen Bauteile gefertigt werden.

In der DE 295 02 137 U1 ist eine Spannvorrichtung für ein in einer Hohlwelle zu haltendes Werkstück, aus dem beispielsweise eine Krone gefertigt werden kann, offenbart. Dazu ist eine federbelastete, geschlitzte Spannzange, die am werkstücknahen Ende einen Spannkonus aufweist, der mit einem in der Hohlwelle eingesetzten Ring zusammenwirken kann, vorgesehen. Am werkstückfernen Ende umfasst die Spannzange einen in der Hohlwelle axial beweglichen Anschlagring sowie eine sich am Anschlagring und Konusring abstützende Druckfeder und eine in der Hohlwelle geführte Gewindespindel. Weiterhin ist eine zwischen der Gewindespindel und Spannzange angeordnete Untersetzungsspindel vorgesehen, deren eines Ende mit der Gewindespindel in Eingriff kommt und deren anderes Ende kraftschlüssig an der Spannzange anliegt.

In der in der EP 1 652 490 A2 vorgesehenen Vorrichtung zum Herstellen eines zahntechnischen Bauteils wird der Rohling auf einem Teller angeordnet, der wiederum lösbar mit der Fräsmaschine verbunden werden kann. Dabei gibt der Teller eine definierte Ausrichtung in Bezug auf die Fräsmaschine vor.

Gemäß der KR 10 2011 004 58 26 A wird der Rohling über eine Schraube mit einem Gewinde in die Fräsmaschine eingelassen. Der Rohling wird dabei über ein Klebemittel mit einer fixierten Achse der Fräsmaschine verbunden.

Alternativ dazu zeigt die DE 20 2008 006 553 U1 eine Dentalimplantathandhabungsvorrichtung mit einer Grundplatte, mit einem an der Grundplatte gelagerten Spannfutter zur Aufnahme eines Laborimplantats, sowie mit einer manuell betätigbaren Spannzange zur lösbaren Spannung das Laborimplantats.

Gemäß der EP 2 036 516 A2 ist zur Halterung des Rohlings eine mit diesem Rohling verbundene Halterung vorgesehen, die lösbar mit einem Adapter verbunden werden kann, um in der Werkstückaufnahme einer spanabhebenden Vorrichtung gelagert zu werden.

Gemäß der DE 10 2007 061 928 B3 wird der Rohling in einer Halterung der Fräsmaschine eingelassen. Aufgrund der Form der Aussparung der Halterung kann der Rohling in zwei Ausrichtungen, nämlich in einer ersten und in einer um 180° dazu gedrehten Ausrichtung in die Halterung eingelassen werden.

Ein Werkstückhalter für die Halterung eines Rohlings zur Herstellung zahntechnischer Formteile ist weiterhin in der DE 10 2008 030 050 A1 offenbart, wobei dieser eine Basis aufweist, auf welcher der Rohling befestigt werden kann. Weiterhin ist an der vom Rohling wegweisenden Seite der Basis ein Schaftbereich vorgesehen, der zum Einsetzen in die Halterung einer Bearbeitungsmaschine genutzt werden kann. Dieser Schaft umfasst zwei Anlageflächen, wobei wenigstens eine Anlagefläche bezüglich der Längsachse der Basis bzw. der Schaft geneigt ist, um eine Fixierung in der Bearbeitungsmaschine zu ermöglichen.

Aus der WO 2013/167903 A1 ist eine Halterung für Rohlinge zur Herstellung zahntechnischer Bauteile bekannt, wobei die Rohlinge direkt am Rohlingsmaterial seitlich an der Halterung montiert sind und in dieser Position bearbeitet werden.

Ähnliches zeigt die WO 2013/167904 A1, wobei in der Halterung mehrere Merkmale vorgesehen sind, die eine wohldefinierte Befestigung an der Fräsmaschine ermöglichen und so die Ausrichtung der Vielzahl der an der Halterung seitlich befestigten Rohlinge sicherstellen.

Weiterhin zeigt die DE 20 2014 103 291 U1 einen Rohling, der in einen Halterbereich mittels eines am Rohling angebrachten Befestigungsvorsprungs eingelassen werden kann. Zur lagegenauen Ausrichtung des Rohlings in Bezug auf den Halterbereich, ist eine Nut am Rohling und ein Passstift im Halterbereich vorgesehen. Zum Einspannen des Rohlings wird eine um den gesamten Halterbereich sich erstreckende Überwurfmutter verwendet.

Dokument US 6,224,371 (D1) offenbart eine Trägervorrichtung für die Herstellung von Zahnprothesenkomponenten aus einem Rohling, wobei die Trägervorrichtung einen Anschlag und eine Halterung für den Rohling umfasst, wobei die Halterung so ausgebildet ist, dass sie von einer die Halterung umschließenden Fassung des Rohlings umfasst werden kann und die umschließende Fassung des Rohlings mit dem Anschlag zur Positionierung in Anlage gebracht werden kann. Zur Herstellung eines Zahnprothesenkomponenten aus dem Rohling wird diese Trägervorrichtung in einer Fräsmaschine montiert. Der Rohling wird anhand einer Schraube lösbar mit dem Trägervorrichtung verbunden. Beim fest zudrehen der Schraube wird der Rohling im Kontakt mit einem Drehsicherungsmittel der Halterung gepresst, um eine Drehung des Rohlings gegenüber der Trägervorrichtung zu vermieden. Dokument US 2004/120781 A1 offenbart eine ähnlich Schraubverbindung mit Drehsicherung zwischen einem Rohling und die Halterung der Fräsmaschine.

Gemäß dem vorliegenden Stand der Technik ist während der Herstellung des zahntechnischen Bauteils, insbesondere der Krone oder eines Abutments, noch keine Anschlussgeometrie vorgesehen. Weiterhin ist das Einspannen der Rohlinge in die Fräsmaschine nicht eindeutig mit Bezug auf die später zu erzielende Ausrichtung des Werkstücks vorgesehen und es kann zu geringfügigen Fehlstellungen des Rohlings, wie beispielsweise Verkantungen, beim Einspannen in die Fräsmaschine kommen, so dass das aus dem Rohling hergestellte Werkstück Fehler aufweisen kann. Ferner werden mehrere Bauteile verwendet, um zum einen eine Befestigung des Rohlings in der Fräsmaschine zu ermöglichen und zum anderen eine gewünschte Ausrichtung des Rohlings zu gewährleisten. Dabei ergibt sich das Problem, dass selbst geringfügige Fehler beim Einspannen und Fehlstellungen zwischen den Mitteln zum Feststellen einer gewünschten Ausrichtung und der Halterung erheblichen Einfluss auf die Qualität des zahntechnischen Bauteils haben können.

### Aufgabe

Ausgehend vom bekannten Stand der Technik ist es daher Aufgabe der vorliegenden Erfindung, eine verbesserte Haltevorrichtung für einen Rohling zur Herstellung eines zahnmedizinischen Bauteils mit Hinblick auf den korrekten Halt und die Ausrichtung des Rohlings bereitzustellen und einen entsprechend ausgebildeten Rohling bereitzustellen.

### Lösung

Diese Aufgabe wird erfindungsgemäß durch die Fräsmaschine zum Herstellen eines zahntechnischen Bauteils gemäß unabhängigem Anspruch 1 und dem Rohling gemäß Anspruch 8 gelöst. Vorteilhafte Weiterbildungen der Erfindung sind in den Unteransprüchen erfasst.

Die erfindungsgemäße Fräsmaschine ist dadurch gekennzeichnet, dass die Halterung so ausgebildet ist, dass sie von einer die Halterung umschließenden Fassung des Rohlings umfasst werden kann und die umschließende Fassung des Rohlings mit dem Anschlag zur Positionierung in Anlage gebracht werden kann. Dadurch kann eine formschlüssige Positionierung des Rohlings an der Halterung sichergestellt werden. Durch Vorsehen des Anschlags wird ein wohldefinierter Abstand zwischen der Fräsmaschine und dem Beginn des Rohlings gewährleistet, so dass Fehler bei der Herstellung des Rohlings, insbesondere mit Hinblick auf die Länge des später entstehenden zahntechnischen Bauteils, erheblich reduziert werden können.

Gemäß einer Ausführungsform kann vorgesehen sein, dass an der Halterung Mittel zur lösbaren Verbindung mit der umschließenden Fassung vorgesehen sind. Diese Mittel können die form- und kraftschlüssige Verbindung des Rohlings mit der Fräsmaschine weiter verbessern, so dass Ungenauigkeiten bei der Herstellung des zahntechnischen Bauteils reduziert werden können.

In einer Weiterbildung dieser Ausführungsform ist vorgesehen, dass die Mittel wenigstens ein Gewinde für eine Schraube umfassen. Durch Einlassen einer entsprechend geformten Schraube ist eine Fixierung eines in die Fräsmaschine eingelassen Rohlings mit sehr hoher Genauigkeit möglich, so dass Bewegungen bzw. Fehlstellungen des Rohlings in Translationsrichtung oder in Rotationsrichtung vermieden werden können.

In einer weiteren Ausgestaltung umfasst die Halterung zwei Gewinde für Schrauben, wobei eine Verbindungslinie der Gewinde durch die Längsachse der Halterung verläuft. Die Genauigkeit bei der Positionierung des Rohlings in der Fräsmaschine kann so gegenüber der Verwendung einer Schraube weiter verbessert werden. Sind die einzelnen Schrauben unterschiedlicher Form und/oder Größe, kann auch eine falsche Orientierung des Rohlings um beispielsweise 180° vermieden werden.

Gemäß einer weiteren Ausführungsform ist vorgesehen, dass der Anschlag eine Ebene definiert und die Halterung eine Längsachse senkrecht zu der Ebene aufweist, wobei die Halterung symmetrisch oder asymmetrisch bezüglich der Längsachse geformt ist. Die symmetrische Form der Halterung kann das Aufsetzen des Rohlings mittels der umschließenden Fassung für einen Bediener möglichst einfach gestalten, wohingegen das Vorsehen einer asymmetrisch bezüglich der Längsachse geformten Halterung die Ausrichtung des auf die Halterung aufgesetzten Rohlings vorgibt, so dass fehlerhafte Ausrichtungen vermieden werden können.

In einer Weiterbildung dieser Ausführungsform ist vorgesehen, dass die Halterung asymmetrisch bezüglich der Längsachse geformt ist und wenigstens eine ebene, zur Längsachse parallele Fläche aufweist.

In einer Weiterbildung der vorherigen Ausführungsformen ist vorgesehen, dass durch die Form der Halterung die Ausrichtung des Rohlings in Bezug auf den Anschlag definiert wird. Fehlerhafte Ausrichtungen des Rohlings können so vermieden werden, so dass eine korrekte Positionierung des Rohlings auch mit Hinblick auf eine spätere Anschlussgeometrie des zahntechnischen Bauteils sichergestellt werden kann.

Der erfindungsgemäße Rohling umfasst an einer Seite einen Stift, der eine Anschlussgeometrie des zahntechnischen Bauteils definiert und ist weiterhin dadurch gekennzeichnet dass der Rohling an der gegenüberliegenden Seite eine umschließende Fassung aufweist, mit der eine Halterung einer Fräsmaschine umfasst werden kann und wobei die umschließende Fassung an einem Anschlag der Fräsmaschine in Anlage gebracht werden kann, wobei die umschließende Fassung zwei Öffnungen umfasst. Durch Vorsehen des Stiftes, der die Anschlussgeometrie definiert, kann in der Fräsmaschine bereits das vollständige Bauteil aus dem Rohling auch mit Hinblick auf die spätere Anschlussgeometrie hergestellt werden. Die umschließende Fassung ermöglicht einen form- und kraftschlüssigen Sitz in der Fräsmaschine, so dass das zahntechnische Bauteil auch mit Hinblick auf die spätere Anschlussgeometrie mit hoher Genauigkeit geformt werden kann. Dabei ist der Stift als jedes Bauteil zu verstehen, das ein Einpassen des zahntechnischen Bauteils in eine Halterung oder Anordnung im Kiefer ermöglicht. Darunter fallen neben Stiften für Steckverbindungen auch Schrauben mit Gewinde. Die Form des Stiftes kann kantig, aber auch rund sein. Er kann zylindrisch oder konisch geformt sein. Auch andere Formen sind denkbar. Durch die vorgesehenen Öffnungen können beispielsweise Verbindungselemente zum Herstellen einer lösbaren Verbindung mit der Halterung geführt werden.

In einer Ausführungsform des Rohlings ist vorgesehen, dass die umschließende Fassung eine im Wesentlichen zylindrische äußere Form aufweist, wobei die Fassung eine im Wesentlichen zylindrische innere Form oder eine bezüglich einer Längsachse des Rohlings nicht symmetrische innere Form aufweist. Während die symmetrische innere Form deutlich leichter zu fertigen ist, gestattet die nicht symmetrische innere Form der Fassung bereits eine definierte Ausrichtung des Rohlings, beispielsweise auch mit Bezug auf die Anschlussgeometrie, in der Fräsmaschine.
In einer Weiterbildung dieser Ausführungsformen ist vorgesehen, dass die umschließende Fassung wenigstens eine Öffnung umfasst, durch die Verbindungselemente, wie beispielsweise Schrauben, zum Herstellen einer lösbaren Verbindung mit der Halterung der Fräsmaschine geführt werden können. Durch den Einsatz entsprechend hindurchführender Verbindungselemente, die die umschließende Fassung mit der Fräsmaschine verbinden, kann ein form- und kraftschlüssiger Sitz der umschließenden Fassung und damit des Rohlings in der Fräsmaschine sichergestellt werden, so dass Fehler bei der Herstellung des zahntechnischen Bauteils aus dem Rohling weiter reduziert werden können.

In einer weiteren Weiterbildung ist vorgesehen, dass die Position der Öffnungen von der durch den Stift vorgegebenen Anschlussgeometrie abhängt. Damit kann eine möglichst genaue Ausrichtung des zahntechnischen Bauteils in Bezug auf seine spätere Anschlussgeometrie in der Fräsmaschine gewährleistet werden.

Gemäß einer weiteren Ausführungsform ist vorgesehen, dass die Öffnungen als Aussparungen am vom Rohling wegweisenden Ende der umschließenden Fassung ausgebildet ist.

Es kann vorgesehen sein, dass das vom Rohling wegweisende Ende der umschließenden Fassung im Wesentlichen als ebener Ring ausgebildet ist oder Ringsegmente umfasst, der oder die an dem Anschlag der Fräsmaschine in Anlage gebracht werden kann. Durch die Länge der Fassung wird eine Ausrichtung in Längsrichtung des Rohlings bezüglich der Fräsmaschine vorgegeben. Sind die Öffnungen als Aussparungen am unteren Ende der Fassung, also im Bereich des Rings, ausgebildet, kann eine form- und kraftschlüssige Fixierung des Rohlings mit sehr hoher Genauigkeit sichergestellt werden.

Weiterhin ist ein Rohling gemäß einer der vorangegangenen Ausführungsformen in einer Fräsmaschine gemäß einer der oben genannten Ausführungsformen vorgesehen, wobei die umschließende Fassung die Halterung umschließt und die umschließende Fassung am vom Rohling wegweisenden Ende an dem Anschlag der Fräsmaschine in Anlage gebracht ist. Diese Anordnung bietet den Vorteil, dass durch die umschließende Fassung ein form- und kraftschlüssiger Sitz des Rohlings an der Halterung ermöglicht wird, und gleichzeitig ein wohldefinierter Abstand des Rohlings zum Anschlag durch die Länge der umschließenden Fassung, die am Anschlag der Fräsmaschine in Anlage gebracht ist, definiert wird. Da die umschließende Fassung gleichzeitig die Lage des Rohlings bezüglich der Fräsmaschine in Abhängigkeit der Anschlussgeometrie vorgibt, können Bauteile zur Ausrichtung des Rohlings eingespart und so Fehlerquellen vermieden werden. Es ergibt sich so eine sehr genaue Ausrichtung des Rohlings in Bezug auf die Fräsmaschine, was die Herstellung des zahntechnischen Bauteils mit hoher Genauigkeit ermöglicht.

### Kurze Beschreibung der Figuren

- Figur 1: Schematische Darstellung einer Fräsmaschine.
- Figur 2: Vergrößerte schematische Ansicht des Haltebereichs und eines Rohlings.
- Figur 3a und b: Schematische Darstellung zweier Ausführungsformen der Halterung und der umschließenden Fassung.
- Figur 4a und b: Schematische Darstellung zweier Ausführungsformen der Halterung und der umschließenden Fassung mit unterschiedlicher Querschnittsfläche.
- Figur 5a und b: Schematische Darstellung der Ausrichtung des Rohlings in Bezug auf die Anschlussgeometrie.

### Ausführliche Beschreibung

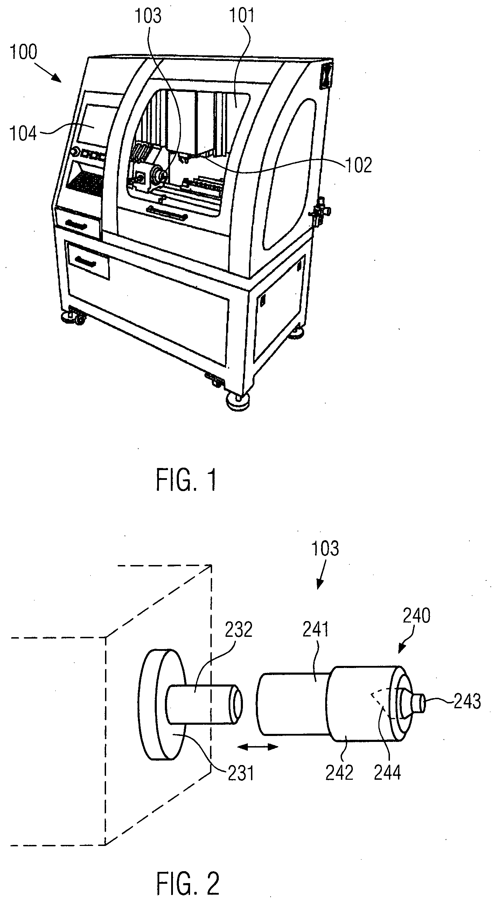

Figur 1 zeigt schematisch den grundsätzlichen Aufbau einer Fräsmaschine 100, wie Sie beispielsweise auch aus dem Stand der Technik bekannt ist. Diese Fräsmaschine kann eine Abdeckung 101 umfassen, in der die übrigen Bestandteile der Fräsmaschine angeordnet sind. Die Abdeckung kann in mehrere einzelne Bereiche unterteilt sein und insbesondere einen Blickbereich umfassen, durch den das Bauteil während der Fertigung beobachtet werden kann. Weiterhin kann eine Luke oder Ähnliches vorgesehen sein, um einen Rohling, aus dem ein zahntechnisches Bauteil, wie beispielsweise eine Krone, gefertigt werden soll, in die Fräsmaschine 100 einzubringen. Zusätzlich, aber nicht notwendig, kann an der Fräsmaschine 101 ein Bedienterminal 104 vorgesehen sein, das beispielsweise Dateneingaben hinsichtlich der Fertigung des zahntechnischen Bauteils ermöglicht. Die Fräsmaschine 100 umfasst weiterhin ein oder mehrere spanabhebende Werkzeuge 102, mit denen ein in die Fräsmaschine 100 eingesetzter Rohling bearbeitet werden kann. Des Weiteren ist eine Halteeinrichtung 103 in einem Haltebereich vorgesehen, in der der Rohling angeordnet oder eingespannt werden kann.

Der Rohling, aus dem das zahntechnische Bauteil hergestellt werden soll, kann dabei in der Halteeinrichtung 103 entweder fest montiert sein oder gegenüber der Halteeinrichtung drehbar angeordnet sein. Im ersten Fall werden für die Bearbeitung des Rohlings ein oder mehrere drehbar und in Richtung des Rohlings bewegbar gelagerte Werkzeuge verwendet. Ist der Rohling selbst bezüglich der spanabhebenden Werkzeuge drehbar gelagert, so wird das spanabhebende Werkzeug üblicherweise in Abhängigkeit der aus dem Rohling herzustellenden Kontur des zahntechnischen Bauteils auf den Rohling zu oder von diesem wegbewegt während der Rohling beispielsweise um seine Längsachse gedreht wird.

Der Rohling kann dabei prinzipiell jede beliebige Gestalt haben. So kann es sich um einen Zylinder aber auch um einen Quader oder um einen Quader mit abgerundeten oder abgeflachten Kanten handeln. Ebenso kann eine dem zahntechnischen Bauteil prinzipiell entsprechende geometrische Struktur, wie ein Konus oder ein Ellipsoid, verwendet werden. Abhängig von der späteren Größe des zahntechnischen Bauteils kann die Größe des Rohlings variieren. So kann sie sich in alle Richtungen über mehrere Millimeter aber auch bis zu 2 oder 4 cm in eine oder mehrere Richtungen erstreckt.

Als Ausgangsmaterial für den Rohling kann üblicherweise eine keramische Verbindung verwendet werden. Es können jedoch auch Kunststoffe oder metallische Legierungen verwendet werden. Grundsätzlich werden Materialien verwendet, die mit spanabhebenden Verfahren bearbeitet werden können. Dabei können hier nicht nur mechanische Werkzeuge verwendet werden, sondern auch Laser zum Einsatz kommen. Die Fräsmaschine 100 umfasst somit nicht nur Ausführungen, die durch mechanische Krafteinwirkung Materialschichten vom Rohling abtrennen, sondern kann auch Laserwerkzeuge umfassen, die Material vom Rohling verdampfen, um das zahntechnische Bauteil herzustellen.

Figur 2 zeigt eine detailliertere schematische Ansicht des Haltebereichs mit der Halteeinrichtung 103 der Fräsmaschine. Die für die Erfindung maßgeblichen Teile der Halteeinrichtung 103 sind hier mit durchgezogenen Linien dargestellt, wohingegen die übrigen Bestandteile der Halteeinrichtung als gestrichelter Quader hier nur angedeutet sind. Die gestrichelte Struktur ist nicht als beschränkend für die Formgebung der Halteeinrichtung 103 zu verstehen, sondern soll nur als Bezugspunkt für die Halterung 232 und den Anschlag 231 dienen.

Erfindungsgemäß ist vorgesehen, dass in der Halteeinrichtung ein Anschlag 231 angeordnet ist. Dieser Anschlag kann, wie dargestellt, beispielsweise als Erhebung mit zylindrischer Form ausgebildet sein. Die Form des Anschlags ist jedoch grundsätzlich beliebig. So kann neben einer zylindrischen Form auch eine Quaderform oder andere Strukturen verwendet werden. Auch unregelmäßige Formen sind denkbar. Der Anschlag 231 definiert gemäß einer Ausführungsform eine von der Halteeinrichtung 103 wegweisende Ebene. Auf dieser Ebene ist eine Halterung 232 angeordnet. An dieser Halterung 232 kann erfindungsgemäß der Rohling angeordnet werden. Bevorzugt ist die Halterung senkrecht auf dem Anschlag angeordnet, sodass eine Längsachse der Halterung durch den Anschlag verläuft und eine Normale des Anschlags, insbesondere der Ebene bildet bzw. parallel zu dieser verläuft. Die Längsachse erstreckt sich dabei parallel zu einem zumindest teilweise gekrümmten Oberflächenbereich der Halterung. Ist die Halterung beispielsweise als Zylinder oder als Körper mit teilweise zylindrisch geformter Mantelfläche ausgebildet, verläuft die Längsachse parallel zur zylindrisch geformten Mantelfläche.

Der Rohling ist in der Figur 2 ebenfalls dargestellt. Der Rohling 240 besteht zum einen aus dem eigentlichen Rohlingsmaterial 242, aus dem das zahntechnische Bauteil hergestellt werden soll und umfasst darüber hinaus ein Element 243. Dieses Element 243 kann beispielsweise als Stift oder als Schraubengewinde ausgebildet sein. Grundsätzlich definiert das Element 243 eine Anschlussgeometrie für das aus dem Rohling 240 herzustellende zahntechnischer Bauteil.

Dabei versteht sich unter der Anschlussgeometrie eine durch das Element 243 vorgegebene Richtung bzw. Orientierung, mit der das zahntechnische Bauteil in den Kiefer eines Patienten eingesetzt werden kann. Diese Anschlussgeometrie gibt somit die vorbestimmte Ausrichtung des zahntechnischen Bauteils wieder. Um eine einwandfreie Funktion und einen korrekten Einbau des zahntechnischen Bauteils zu ermöglichen, muss das zahntechnische Bauteil, das aus dem Rohling 240 gefräst wird, in Form und Ausrichtung mit der Anschlussgeometrie übereinstimmen.

Als anschauliches Beispiel kann als zahntechnisches Bauteil ein Schneidezahn aus dem Rohling 240 zu fertigen sein. Schneidezähne haben im Kiefer eines Patienten eine bestimmte Ausrichtung. Um den ursprünglichen Schneidezahn des Patienten mit einem zahntechnischen Bauteil zu ersetzen, kann der ursprüngliche Zahn entfernt worden sein und in dem Freiraum ein entsprechendes Gewinde oder Verbindungselemente mit dem Kiefer verbunden werden, in welches dann das zahntechnische Bauteil eingelassen werden kann.

Über das Element 243 wird dann beispielsweise über eine entsprechende Schraube oder einen Stift die Ausrichtung des zahntechnischen Bauteils mit Bezug auf die Verbindungselemente definiert. Somit ist klar, dass die aus dem Rohling 240 gefertigte Struktur des zahntechnischen Bauteils in Abhängigkeit der Anschlussgeometrie gefertigt werden muss, um sicherzustellen, dass der Ersatz-Schneidezahn nicht schief oder bezüglich der eigentlich gedachten Position verdreht eingepasst werden würde. In der Figur 2 ist gestrichelt schematisch, beispielhaft die Form eines Schneidezahns 244 als aus dem Rohling 240 zu fertigendes, zahntechnisches Bauteil dargestellt.

Weiterhin umfasst der Rohling 240 auf der, der Anschlussgeometrie bzw. dem Element 243 gegenüberliegenden Seite eine umschließende Fassung 241. Diese umschließende Fassung ist so ausgebildet, dass sie mit der Halterung 232 in Eingriff gebracht werden kann bzw. die Halterung 232 umschließen kann, wenn der Rohling in die Fräsmaschine eingesetzt wird. Dazu ist die umschließende Fassung 241 zumindest teilweise als Hohlzylinder ausgebildet, wobei der freie Bereich innerhalb des Hohlzylinders der äußeren Form der Halterung 232 an der Fräsmaschine entspricht, so dass die Halterung 232 in die umschließende Fassung 241 eingeführt werden kann.

Die Längsachse der Halterung 232 verläuft dabei in derselben Richtung, in der die umschließende Fassung entlang der Halterung bewegt werden kann, während sie diese umschließt.

Weiterhin ist vorgesehen, dass die umschließende Fassung am vom Rohling wegweisenden Ende mit dem Anschlag 231 an der Fräsmaschine in Anlage gebracht werden kann. Dabei ist insbesondere vorgesehen, dass die umschließende Fassung 241 bei korrektem Sitz des Rohlings in der Fräsmaschine auf der Halterung 232 angeordnet ist bzw. diese umschließt und mit dem Anschlag 231 in Anlage gebracht ist. So kann ein formschlüssiger Halt des Rohlings in der Fräsmaschine sichergestellt werden, da insbesondere Verkippungen der umschließenden Fassung 241 in Bezug auf die Halterung 232 durch den Anschlag 231 verhindert werden.

Um eine form- und kraftschlüssige, lösbare Verbindung des Rohlings mit der Fräsmaschine zu gewährleisten, sind zusätzliche Elemente sowohl an der umschließenden Fassung als auch - beispielsweise komplementär dazu - an der Halterung 232 der Fräsmaschine vorgesehen.

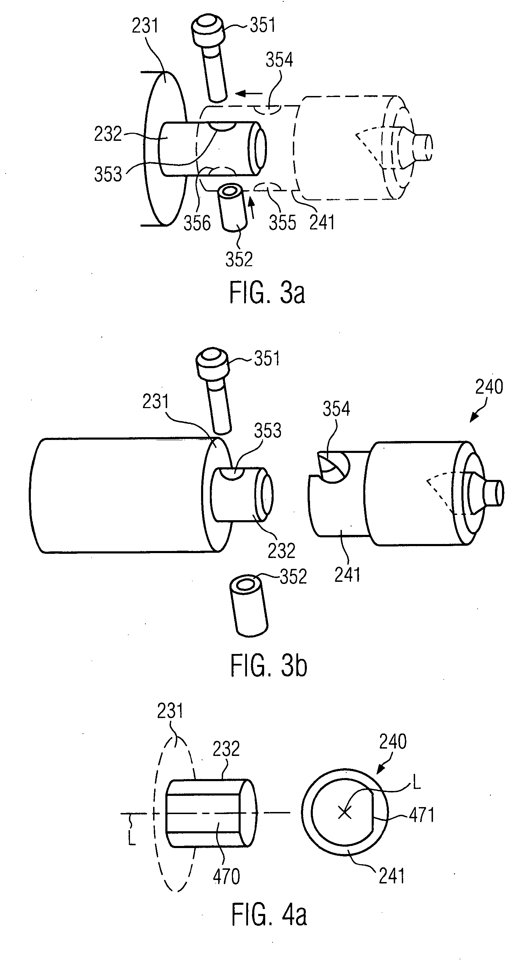

Dazu zeigt Figur 3a eine beispielhafte Ausführungsform. Bei dieser ist vorgesehen, dass in der Halterung 232 wenigstens ein Mittel 353 zum Herstellen einer lösbaren Verbindung mit der umschließenden Fassung ausgebildet ist. In einer Ausführungsform ist vorgesehen, dass dieses Mittel 353 eine Öffnung oder ein Gewinde für eine Schraube 351 umfasst. Entsprechend umfasst die umschließende Fassung 241 des Rohlings eine Öffnung 354, durch welche die Schraube 351 geführt und mit der Halterung 232 verbunden, insbesondere verschraubt werden kann. Durch die Verschraubung der Schraube 351 durch die umschließende Fassung des Rohlings hindurch mit der Halterung 232 kann eine form- und kraftschlüssige, lösbare Verbindung des Rohlings mit der Halterung 232 in der Fräsmaschine sichergestellt werden.

Durch geeignete Wahl des Abstandes der Öffnung in der Halterung und der entsprechenden Öffnung in der umschließenden Fassung 241 des Rohlings in Relation zum Anschlag 231 kann weiterhin gewährleistet werden, dass die Verschraubung nur dann erfolgen kann, wenn die umschließende Fassung in Anlage mit dem Anschlag 231 gebracht wurde. Somit wird der Abstand des eigentlichen Materials 242, aus dem das zahntechnische Bauteil geformt werden soll, in Relation zum Anschlag 231 exakt definiert. Weiterhin wird so ein Verkippen des Rohlings relativ zur Halterung 232 unterbunden, da die umschließende Fassung mit dem Anschlag 231 in Anlage gebracht ist.

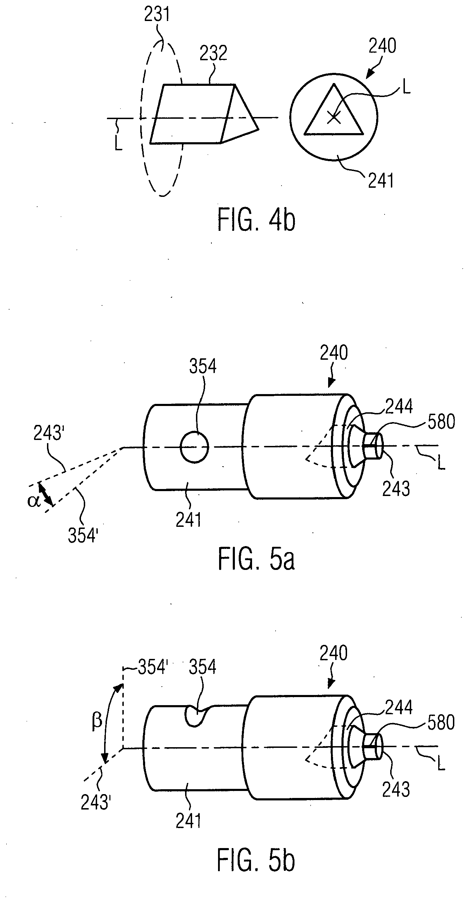

Zu diesem Zweck kann beispielsweise vorgesehen sein, dass der vom Rohling wegweisende Teil der umschließenden Fassung 241 einen im Wesentlichen als Ring ausgebildeten Querschnitt aufweist, der mit dem Anschlag der Fräsmaschine in Anlage gebracht werden kann. Beispiele des Querschnitts sind in den Figuren 4a und 4b dargestellt. Um die Auflagefläche zu erhöhen, kann weiterhin vorgesehen sein, dass die umschließende Fassung in diesem Bereich einen größeren Durchmesser aufweist als im übrigen Bereich.

Um das Verkippen des Rohlings möglichst vollständig zu unterbinden, müssen sowohl die Fläche an der umschließenden Fassung, die mit dem Anschlag in Anlage gebracht wird, als auch der Anschlag 231 selbst möglichst eben ausgebildet sein. So ist vorgesehen, dass Abweichungen des Anschlags 231 von einer Ebene höchstens 10µm, bevorzugt 5µm, besonders bevorzugt weniger als 3µm betragen. Ebenso ist bevorzugt, wenn der Bereich der umschließenden Fassung 241, der mit dem Anschlag 231 in Anlage gebracht wird, von einer Ebene nur um wenige Mikrometer, besonders bevorzugt weniger als 5µm abweicht. Dabei versteht sich diese Abweichung so, dass relativ zu einer gedachten Ebene, die den Mittelwert der realen, durch den Anschlag definierten Ebene, wiedergibt, die Abweichungen der realen, durch den Anschlag definierten Ebene höchstens die angegebenen Werte erreichen. Analoges gilt für die umschließende Fassung.

Ebenso sollte der Abstand der Öffnung in der Halterung 232 zum Anschlag 231 sowie der Öffnung 354 zum vom Rohling wegweisenden Ende der umschließenden Fassung 241 möglichst gleich sein, so dass die umschließende Fassung tatsächlich in Anlage mit dem Anschlag 231 gebracht wird, wenn die Schraube 351 durch die Öffnungen geschraubt wird. Um dies weiter zu begünstigen, kann vorgesehen sein, dass der Abstand der Öffnung in der Halterung 232 zum Anschlag 231 geringfügig kleiner ist, als der Abstand der Öffnung 354 zum vom Rohling wegweisenden Ende der umschließenden Fassung. Wird die umschließende Fassung dann beispielsweise mittels einer Schraube mit der Halterung verbunden, so bewirkt die resultierende Anzugskraft der umschließenden Fassung in Richtung des Anschlags 231 ein sicheres Anliegen der umschließenden Fassung am Anschlag 231. Dabei kann der Abstand der Öffnung in der Halterung 232 zum Anschlag 231 beispielsweise 0,1mm, bevorzugt 50µm, besonders bevorzugt 20µm kleiner sein, als der Abstand der Öffnung 354 zum vom Rohling wegweisenden Ende der umschließenden Fassung. Große Unterschiede der Abstände vergrößern zwar die resultierende Anzugskraft der umschließenden Fassung in Richtung des Anschlags, führen jedoch auch zu erhöhten Spannungen im Material, was zu Verformungen und Fehlstellungen führen kann. Daher sind Unterschiede in den Abständen der Öffnungen bevorzugt, die zwar eine Anzugskraft der umschließenden Fassung in Richtung der Halterung sicherstellen, jedoch möglichst keine Verformungen des Materials hervorrufen.

Um weiterhin den form- und kraftschlüssigen Sitz der umschließenden Fassung auf der Halterung 232 zu verbessern, ist vorgesehen dass wenigstens zwei Schrauben oder zwei ineinander verschraubbare Elemente 351 und 352 vorgesehen sind und dementsprechend zwei Öffnungen in der Halterung 232 und zwei Öffnungen in der umschließenden Fassung 241. Besonders bevorzugt ist es, wenn eine Schraube 351 verwendet wird und eine Hülse 352, die eine Öffnung mit einem Gewinde für die Schraube 351 umfasst. Die Öffnungen in der Halterung 232 und der umschließenden Fassung 241 sind dann gegenüberliegend ausgebildet. Dies bedeutet, dass die Verbindungslinie zwischen den Mitten der Öffnungen die Längsachse L der umschließenden Fassung 241 und die Längsachse der Halterung 232 schneiden. Da durch die Verwendung der Hülse und der Schraube eine zusätzliche mechanische Kopplung erzeugt wird, wird der form- und kraftschlüssige Sitz der umschließenden Fassung auf der Halterung 232 noch weiter verbessert.

Um ein versehentliches Aufsetzen des Rohlings um 180° gedreht zu der eigentlich beabsichtigten Position zu verhindern, kann vorgesehen sein, dass die Schraube 351 und die Hülse 352 nur bei der korrekten Ausrichtung der umschließenden Fassung auf der Halterung eingeschraubt werden können. Das kann beispielsweise durch unterschiedlich große Öffnungen in der umschließenden Fassung 241 und der Halterung realisiert werden, wobei nur in der korrekten Ausrichtung der Öffnung 354 bzw. 355 über der entsprechenden Öffnung 353 bzw. 356 der Halterung ein Einlassen der Schraube 351 bzw. der Hülse 352 ermöglicht wird.

Bei Verwendung zweier Schrauben kann dies auch dadurch sichergestellt werden, dass die Öffnungen in der Halterung bzw. der Fassung in einem bestimmten Winkel zueinander, der von 180° verschieden ist, vorgesehen sind. So können beispielsweise die Öffnung 354 und die Öffnung 355 in der umschließenden Fassung um 90° bezüglich der Längsachse L verdreht sein (analoges gilt für die Öffnungen 353 bzw. 356 in der Halterung), so dass nur bei entsprechender Ausrichtung der umschließenden Fassung in Bezug auf die Halterung 232 ein Einlassen der Schrauben überhaupt möglich wird.

Figur 3b zeigt eine weitere Ausführungsform, bei der die umschließende Fassung 241 anstelle einer vollständigen Öffnung eine Aussparung am vom Rohling wegweisenden Ende der umschließenden Fassung umfasst, durch die die entsprechende Schraube 351 oder, wie mit Bezug auf Figur 3a beschrieben, die Hülse 352 eingelassen werden kann. Die umschließende Fassung weist in diesem Fall an der vom Rohling wegweisenden Seite keinen vollständigen Ring, sondern zwei oder mehr Ringsegmente auf, die durch die Aussparungen voneinander getrennt sind. Auch diese Ringsegmente werden analog zum vollständigen Ring mit dem Anschlag in Anlage gebracht und erfüllen entsprechende Anforderungen hinsichtlich der Genauigkeit mit Bezug auf Abweichungen zu einer gedachten Ebene.

In den in Fig. 3a und 3b dargestellten Ausführungsformen kann vorgesehen sein, dass die Öffnungen in der Halterung und in der umschließenden Fassung kein Gewinde, sondern eine glatte begrenzende Fläche aufweisen. Weiterhin kann die Schraube 351 bevorzugt als Senkkopfschraube und die Hülse 352 als Senkkopfmutter mit innen liegendem Gewinde ausgebildet sein.

Um ein unerwünschtes Drehen der Hülse 352 (insbesondere der Senkkopfmutter) beim Eindrehen der Schraube zu verhindern, kann in der in Fig. 3b dargestellten Ausführungsform vorgesehen sein, dass die Hülse einen abgeflachten Bereich aufweist, der am Anschlag 231 in Anlage gebracht werden kann. Damit kann ein Formschluss bezüglich eines Rotationsfreiheitsgrads der Hülse 352 erreicht und ein Mitdrehen bei Einschrauben der Schraube verhindert werden.

Alternativ oder in Kombination dazu kann vorgesehen sein, dass die äußere Form der Halterung 232 und der umschließenden Fassung 241 bezüglich der Längsachse nicht symmetrisch ist. Dies ist in Figur 4 dargestellt.

Gemäß der in Figur 4a dargestellten Ausführungsform ist vorgesehen, dass die Halterung prinzipiell zylindrisch ausgebildet ist, wobei die Längsachse L durch die gedachte Symmetrieachse eines entsprechenden Zylinders verläuft. Die Halterung 232 umfasst jedoch zumindest an einer Stelle eine Flachstelle 470. Dabei können auch mehrere Flachstellen vorgesehen sein, die beispielsweise äquidistant am Umfang der Halterung 232 verteilt sind. Bei nicht äquidistanter Verteilung dieser Flachstellen am Umfang der Halterung 232 kann in Verbindung mit der umschließenden Fassung dafür gesorgt werden, dass die umschließende Fassung nur in genau einer Ausrichtung auf die Halterung 232 aufgesetzt werden kann.

Dazu ist in Figur 4a weiterhin ein Querschnitt durch die umschließende Fassung 241 des Rohlings 240 dargestellt. Die Längsachse L verläuft senkrecht zur Papierebene. Während die äußere Form der umschließenden Fassung 241 zylindrisch oder annähernd zylindrisch, prinzipiell aber auch beliebig geformt sein kann, um ein Anliegen am Anschlag 231 sicherzustellen, ist die innere Form komplementär zur äußeren Form der Halterung 232 geformt. Dies bedeutet insbesondere, dass die innere Form der umschließenden Fassung 241 einen Bereich 471 in Form einer Flachstelle umfasst, die in Größe und Form der Flachstelle 470 an der Halterung 232 entspricht.

Alternativ dazu kann auch vorgesehen sein, dass die Halterung 232 als andere geometrische Form, beispielsweise, wie in Figur 4b dargestellt, als Prisma ausgebildet ist. Dabei verläuft die Längsachse der Halterung 232 senkrecht zum Anschlag 231 an der Fräsmaschine. Analog kann der Querschnitt der umschließenden Fassung 241 senkrecht zur Längsachse L eine entsprechende innere Querschnittsform eines Prisma aufweisen, so dass der Rohling 240 über die umschließende Fassung 241 an der Fräsmaschine mit der Halterung 232 in Eingriff gebracht werden kann und am Anschlag 231 in Anlage gebracht werden kann.

Figuren 5a und 5b zeigen die Orientierung der Öffnung 354 in der umschließenden Fassung 241 in Relation zu einer durch den Stift 243 vorgegebenen Anschlussgeometrie 580. Der Einfachheit halber ist die Anschlussgeometrie 580 hier als Streifen schematisch dargestellt. Die Orientierung wird über die gestrichelte Linie 243' dargestellt. Dabei ist die Bestimmung dieser Orientierung 243' grundsätzlich beliebig aber in Figur 5a und 5b auf derselben Grundlage erfolgt. Beispielsweise kann eine Verbindungslinie zwischen der Anschlussgeometrie 580 an der Oberfläche des Stiftes und der Längsachse L gewählt werden, wobei diese Verbindungslinie senkrecht auf der Längsachse steht. Die so entstehende Linie kann als charakteristisch für die Orientierung der Anschlussgeometrie 580 verstanden werden. Analog kann die Orientierung der Öffnung 354 so bestimmt werden, dass vom Mittelpunkt der Öffnung aus eine senkrechte Verbindungslinie zur Längsachse L gebildet wird, so dass die Orientierung 354' festgelegt wird.

In Figur 5a ist die Öffnung um einen Winkel α bezüglich der Anschlussgeometrie 580 verdreht, so dass die Orientierungen 243' und 354' einen entsprechenden Winkel α zueinander einschließen. Das aus dem Rohling 240 herzustellende zahntechnische Bauteil 244 hätte also eine bestimmte, erste Orientierung mit Bezug auf die Anschlussgeometrie 580, die hier beispielhaft gestrichelt dargestellt ist.

In Figur 5b ist die Öffnung 354 und damit die vorgegebene Orientierung der umschließenden Fassung in Bezug auf die Halterung der Fräsmaschine um einen Winkel β bezüglich der Anschlussgeometrie 580 verdreht. Daraus ergibt sich eine andere Orientierung des aus dem Rohling 240 herzustellenden zahntechnischen Bauteils 244, wie dies hier ebenfalls gestrichelt dargestellt ist.

So gestattet die Wahl der Öffnungen, bzw. allgemein der Verbindungselemente der umschließenden Fassung, die das Herstellen einer lösbaren Verbindung mit der Halterung der Fräsmaschine ermöglichen, in Relation zur Anschlussgeometrie 580 das Festlegen der Orientierung des aus dem Rohling herzustellenden zahntechnischen Bauteils in Relation zu dieser Anschlussgeometrie mit hoher Genauigkeit. Durch die umschließende Fassung und die Verbindungselemente zum Herstellen der lösbaren Verbindung mit der Halterung und dem Anschlag kann weiterhin eine möglichst genaue Ausrichtung des Rohlings 240 als solchen an der Fräsmaschine erfolgen, so dass das zahntechnische Bauteil auch entsprechend der vorgegebenen Anschlussgeometrie mit nur minimalen Abweichungen gefräst werden kann.

## Patentansprüche

1. Fräsmaschine zum Herstellen eines zahntechnischen Bauteils, wie beispielsweise eine Krone oder ein Abutment, aus einem Rohling, wobei die Fräsmaschine einen Anschlag (231) und eine Halterung (232) für den Rohling umfasst, wobei die Halterung so ausgebildet ist, dass sie von einer die Halterung umschließenden Fassung (241) des Rohlings umfasst werden kann und die umschließende Fassung des Rohlings mit dem Anschlag zur Positionierung in Anlage gebracht werden kann, **dadurch gekennzeichnet, dass** an der Halterung Mittel (353) zur lösbaren Verbindung mit der umschließenden Fassung vorgesehen sind und die Mittel wenigstens ein Gewinde für eine Schraube (351) umfassen, wobei die Mittel geeignet sind, durch Einlassen einer entsprechend geformten Schraube eine Fixierung eines in die Fräsmaschine eingelassenen Rohlings zu ermöglichen, so dass Bewegung bzw. Fehlstellungen des Rohlings in Rotationsrichtung vermieden werden können, wobei die Halterung zwei Gewinde für Schrauben umfassen, wobei eine Verbindungslinie der Gewinde durch die Längsachse der Halterung verläuft.

2. Fräsmaschine nach Anspruch 1, **dadurch gekennzeichnet, dass** der Anschlag eine Ebene definiert und die Halterung eine Längsachse senkrecht zu der Ebene aufweist, wobei die Halterung symmetrisch oder asymmetrisch bezüglich der Längsachse geformt ist.

3. Fräsmaschine nach Anspruch 2, **dadurch gekennzeichnet, dass** die Halterung asymmetrisch bezüglich der Längsachse geformt ist und wenigstens eine ebene, zur Längsachse parallele Fläche (470) aufweist.

4. Fräsmaschine nach Anspruch 2 oder 3, **dadurch gekennzeichnet, dass** durch die Form der Halterung die Ausrichtung des Rohlings in Bezug auf den Anschlag definiert wird.

5. Rohling (240) aus dem ein zahntechnisches Bauteil, wie beispielsweise eine Krone oder ein Abutment, gefräst werden kann, wobei der Rohling an einer Seite einen Stift; (243) aufweist, der eine Anschlussgeometrie des zahntechnischen Bauteils definiert, **dadurch gekennzeichnet, dass** der Rohling an der gegenüberliegenden Seite eine umschließende Fassung aufweist, mit der eine Halterung einer Fräsmaschine umfasst werden kann und wobei die umschließende Fassung (241) an einem Anschlag der Fräsmaschine in Anlage gebracht werden kann, wobei die umschließende Fassung zwei Öffnungen umfasst.

6. Rohling nach Anspruch 5, **dadurch gekennzeichnet, dass** die umschließende Fassung eine im wesentlichen zylindrische äußere Form aufweist, wobei die Fassung eine im wesentlichen zylindrische innere Form oder eine bezüglich einer Längsachse des Rohlings nicht symmetrische innere Form aufweist.

7. Rohling nach Anspruch 6, **dadurch gekennzeichnet, dass** durch die Öffnungen Verbindungselemente, wie beispielsweise Schrauben, zum Herstellen einer lösbaren Verbindung mit der Halterung der Fräsmaschine geführt werden können.

8. Rohling nach Anspruch 7, **dadurch gekennzeichnet, dass** die Position der Öffnungen von der durch den Stift (243) vorgegebenen Anschlussgeometrie abhängt.

9. Rohling nach Anspruch 7 oder 8, **dadurch gekennzeichnet, dass** die Öffnungen als Aussparung am vom Rohling wegweisenden Ende der umschließenden Fassung ausgebildet sind.

10. Rohling nach einem der Ansprüche 5 bis 9, **dadurch gekennzeichnet, dass** das vom Rohling wegweisende Ende der umschließenden Fassung im wesentlichen als ebener Ring ausgebildet ist oder Ringsegmente umfasst, der oder die an dem Anschlag der Fräsmaschine in Anlage gebracht werden kann.

11. Rohling nach einem der Ansprüche 5 bis 10 **dadurch gekennzeichnet, dass** der Rohling in einer Fräsmaschine nach einem der Ansprüche 1 bis 5 angeordnet ist, wobei die umschließende Fassung die Halterung umschließt und die umschließende Fassung am vom Rohling wegweisenden Ende an dem Anschlag der Fräsmaschine in Anlage gebracht ist.

## Claims

1. Milling machine for producing a dental component, such as a crown or an abutment, from a blank, wherein said milling machine comprises a stop (231) and a holder (232) for said blank, **characterized in that** said holder is designed such that it can be surrounded by a mounting (241), which surrounds said holder, of said blank, and the surrounding mounting of said blank can be brought into contact with said stop for positioning purposes, **characterized in that** devices (353) are provided on said holder for a detachable connection to said surrounding mounting and the devices comprise at least one thread for a screw (351), wherein the means are suitable for fixating a blank being inserted into the milling machine by insertion of a correspondingly shaped screw so that motions or misalignments of the blank in the direction of of rotation can be avoided, wherein said holder comprises two threads for screws, where a connecting line of said threads extends through the longitudinal axis of said holder.

2. Milling machine according to claim 1, **characterized in that** said stop defines a plane and said holder has a longitudinal axis perpendicular to said plane, where said holder is shaped symmetrically or asymmetrically with respect to said longitudinal axis.

3. Milling machine according to claim 2, **characterized in that** said holder is shaped asymmetrically with respect to the longitudinal axis and has at least one flat surface (470) parallel to said longitudinal axis.

4. Milling machine according to claim 2 or 3, **characterized in that** the orientation of said blank with respect to said stop is defined by the shape of said holder.

5. Blank (240), from which a dental component, such as for example, a crown or an abutment, can be milled, where said blank on one side comprises a pin (243) which defines a connection geometry of said dental component, **characterized in that** said blank on the opposite side comprises a surrounding mounting with which a holder of a milling machine can be surrounded, and where said surrounding mounting (241) can be brought into contact with a stop of said milling machine, where said surrounding mounting comprises two openings.

6. Blank according to claim 5, **characterized in that** said surrounding mounting has a substantially cylindrical outer shape, where said mounting has a substantially cylindrical inner shape or an inner shape which is not symmetrical with respect to a longitudinal axis of said blank.

7. Blank according to claim 6, **characterized in that** connecting elements, such as for example, screws, can be passed through said openings in order to establish a detachable connection to said holder of said milling machine.

8. Blank according to claim 7, **characterized in that** the position of said openings depends on the connection geometry prescribed by said pin (243).

9. Blank according to claim 7 or 8, **characterized in that** said openings are designed as a recess on the end of said surrounding mounting facing away from said blank.

10. Blank according to one of the claims 5 to 9, **characterized in that** the end of said surrounding mounting facing away from said blank is substantially designed as a flat ring or comprises ring segments which can be brought into contact with said stop of said milling machine.

11. Blank according to one of the claims 5 to 11, **characterized in that** said blank is arranged in a milling machine according to one of the claims 1 to 5, where said surrounding mounting surrounds said holder and said surrounding mounting is at the end facing away from said blank brought into contact with said stop of said milling machine.

## Revendications

1. Fraiseuse pour la fabrication d'un composant de dentisterie, tel qu'une couronne ou un pilier, à partir d'une ébauche, la fraiseuse comprenant une butée (231) et un support (232) pour l'ébauche, le support étant conçu pour être entouré par une douille (241) de l'ébauche entourant le support et la douille d'encastrement de l'ébauche peut être mise en butée avec la butée de positionnement, **caractérisé en ce que** des moyens (353) pour la connexion amovible à la douille d'encastrement sont prévus sur le support et les moyens comprennent au moins un filetage pour une vis (351), les moyens étant appropriés, pour permettre la fixation d'une ébauche encastrée dans la fraiseuse par l'insertion d'une vis de forme appropriée, de manière à éviter tout mouvement ou désalignement de l'ébauche dans le sens de la rotation, le support comprenant deux filets pour les vis, une ligne de jonction des filets passant par l'axe longitudinal du support.

2. Fraiseuse selon la revendication 1, **caractérisée en ce que** la butée définit un plan et le support a un axe longitudinal perpendiculaire au plan, le support étant de forme symétrique ou asymétrique par rapport à l'axe longitudinal.

3. Fraiseuse selon la revendication 2, **caractérisée en ce que** le support est de forme asymétrique par rapport à l'axe longitudinal et présente au moins une surface plane (470) parallèle à l'axe longitudinal.

4. Fraiseuse selon les revendications 2 ou 3, **caractérisée en ce que** la forme du support définit l'orientation de l'ébauche par rapport à la butée.

5. Ebauche (240) à partir de laquelle un composant de dentisterie, tel qu'une couronne ou un pilier, peut être fraisé, l'ébauche ayant sur un côté une broche (343)Z qui définit une géométrie de connexion du composant de dentisterie, **caractérisée en ce que** l'ébauche présente sur le côté opposé une douille d'entourage avec laquelle un support d'une machine de fraisage peut être enfermé et dans laquelle la douille d'entourage (241) peut être amenée en butée contre une butée de la machine de fraisage, la douille d'entourage comprenant deux ouvertures.

6. Ebauche selon la revendication 5, **caractérisée en ce que** la douille qui l'entoure est de forme extérieure sensiblement cylindrique, la douille ayant une forme intérieure sensiblement trop cylindrique ou une forme intérieure qui n'est pas symétrique par rapport à un axe longitudinal de l'ébauche.

7. Ebauche selon la revendication 6, **caractérisée en ce que** des éléments de liaison, tels que des vis, peuvent être passés à travers les ouvertures pour établir une liaison amovible avec le support de la fraiseuse.

8. Ebauche selon la revendication 7, **caractérisée en ce que** la position des ouvertures dépend de la géométrie de connexion prédéterminée par la broche (243).

9. Ebauche selon les revendications 7 ou 8, **caractérisé en ce que** les ouvertures sont formées comme un évidement à l'extrémité de la douille de fermeture tournée à l'opposé de l'ébauche.

10. Ebauche selon l'une des revendications 5 à 9, **caractérisée en ce que** l'extrémité du support d'entourage opposée à l'ébauche est essentiellement conçue comme un anneau plat ou comprend des segments d'anneau qui peuvent être mis en contact avec la butée de la fraiseuse.

11. Ebauche selon l'une quelconque des revendications 5 à 10, **caractérisée en ce que** l'ébauche est disposée dans une fraiseuse selon l'une quelconque des revendications 1 à 5, dans laquelle le réglage de l'entourage entoure le support et le réglage de l'entourage est mis en contact avec la butée de la fraiseuse à l'extrémité opposée à l'ébauche.
